# EUROPÄISCHE PATENTSCHRIFT

(11) **EP 3 418 832 B1**
(45) Veröffentlichungstag und Bekanntmachung des Hinweises auf die Patenterteilung: **16.12.2020**
(21) Anmeldenummer: 17176836.9
(22) Anmeldetag: 20.06.2017
(51) Int. Cl.: G05B 19/418, H04L 12/26, H04L 9/06, H04L 29/06, H04L 9/32, H04L 12/40

(54) **SICHERE ECHTZEITBASIERTE DATENÜBERTRAGUNG**
SECURE REAL-TIME DATA TRANSMISSION
TRANSMISSION DE DONNÉES SÉCURISÉE EN TEMPS RÉEL

(43) Veröffentlichungstag der Anmeldung: 26.12.2018
(73) Patentinhaber: Siemens Aktiengesellschaft, 80333 München (DE)
(72) Erfinder: Morgenstern, Joachim, 76751 Jockgrim (DE)

(56) Entgegenhaltungen:
- EP-A1- 1 418 706
- EP-A1- 2 407 843
- WO-A1-2016/094703
- DE-A1-102014 017 671

## Beschreibung

Die Erfindung betrifft ein Verfahren einer echtzeitbasierten Übertragung einer Mehrzahl an Datentelegrammen mittels eines Feldbusses in einer industriellen Anlage von wenigstens einem Sender zu wenigstens einem Empfänger, insbesondere Automatisierungsanlage oder Prozessanlage, nach Anspruch 1. Außerdem betrifft die Erfindung ein dazugehöriges Kommunikationssystem nach Anspruch 10 und eine industrielle Anlage gemäß Anspruch 11.

Im Kontext der industriellen Prozess-, Fertigungs- und Anlagentechnik werden Feldbusse basierend auf allgemeinen Kommunikations-Standards zur Kommunikation einzelner Komponenten der industriellen Anlagen eingesetzt. Zur Gewährleistung einer Kommunikationssicherheit bei der Nutzung dieser Kommunikations-Standards sollten verschiedene Sicherheitsmaßnahmen durchgeführt werden.

Zum einen müssen die in dem auf dem Feldbus basierenden Kommunikationsnetz teilnehmenden Kommunikationsteilnehmer als vertrauenswürdig identifiziert werden. Dies erfolgt in der Regel mittels spezieller Signaturen.

Zum anderen sollten die innerhalb des Kommunikationsnetzes übertragenen Datentelegramme verschlüsselt werden. Hierzu benötigen die Kommunikationsteilnehmer jeweils einen speziellen Security-Baustein oder entsprechende Logiken. Dieser Security-Baustein muss sowohl beim Sender eines Datentelegramms als auch beim Empfänger vorhanden sein, um die Verschlüsselung und die entsprechende Entschlüsselung der Datentelegramme vornehmen zu können.

Eine Anordnung mit einem Sender und einem Empfänger, die verschlüsselte Daten austauschen, ist beispielsweise in der EP 2 407 843 A1 offenbart.

Der Feldbus verbindet in der Prozess-, Fertigungs- und Anlagentechnik einzelne Feldgeräte, beispielsweise Geber, Messumformer, Unterstationen oder Antriebe, mit Controllern (CPUs, PLCs oder Prozessoren). Der verwendete Feldbus muss aufgrund der geforderten kurzen Reaktionszeiten von Messwerterfassung bis zur Ansteuerung eines Aktors (nahezu) echtzeitfähig sein. Die zu-vor erläuterten, bisher bekannten Verfahren zur Sicherung der Kommunikation können aufgrund der aufwändigen Verschlüsselung und Entschlüsselung der Datentelegramme bei den geforderten Reaktionszeiten zu Signalausfällen oder Verzögerungen auf dem Feldbus führen. Eine Verzögerung oder Signalausfälle auf dem Feldbus führen in der Regel zu einem Stillstand der mit dem Feldbus betriebenen industriellen Anlage und damit verbundenen Produktionsausfällen.

Die EP 1 418 706 A1 offenbart ein Verfahren zur Parametrierung einer Einrichtung mittels einer Dateneingabevorrichtung, die mittels einer Datenverbindung mit der Einrichtung verknüpft ist.

Der Erfindung liegt die Aufgabe zugrunde, eine Sicherheit, insbesondere eine Identität von Kommunikationsteilnehmern bei einer Übertragung von Datentelegrammen mittels eines Feldbusses zu gewährleisten, wobei die Übertragung der Datentelegramme in Echtzeit (ohne nennenswerte Verzögerungen) erfolgt.

Unter dem Begriff "Echtzeit" werden im Kontext dieser Anmeldung entsprechend geringe Reaktionszeiten verstanden, die bei einer Verwendung von Feldbussen im Kontext industrieller Anlagen üblicherweise notwendig sind.

Diese Aufgabe wird gelöst durch ein Verfahren zu einer echtzeitbasierten Übertragung einer Mehrzahl an Datentelegrammen mit den Merkmalen des Anspruchs 1 und durch ein Kommunikationssystem gemäß Anspruch 10 sowie durch eine industrielle Anläge gemäß Anspruch 11. Vorteilhafte Weiterbildungen ergeben sich aus den abhängigen Ansprüchen.

Bei einem Verfahren zur echtzeitbasierten Übertragung einer Mehrzahl von Datentelegrammen der eingangs beschriebenen Art wird die Aufgabe erfindungsgemäß dadurch gelöst, dass jedes von dem (verifizierten) Sender zu dem (verifizierten) Empfänger zu übertragende Datentelegramm von dem Sender mit einem zusätzlichem Datenindex versehen wird. Der Empfänger hinterlegt jedes von dem Sender empfangene Datentelegramm mit dem dazugehörigen zusätzlichen Datenindex in einem Speicher. Nach dem Ablauf eines vorherbestimmten Zeitintervalls oder nach dem Übertragen einer bestimmten Anzahl an Datentelegrammen überträgt der Sender ein bereits an den Empfänger übertragenes Datentelegramm erneut, wobei das wiederholt übertragene Datentelegramm eine zusätzliche (Geräte-)Signatur aufweist. Vorzugsweise wird das wiederholt übertragene Datentelegramm zusätzlich von dem Sender verschlüsselt. Der Empfänger führt nach dem Empfangen des wiederholt übertragenen, signierten Datentelegramms zur Verifikation des Senders zusätzlich anhand des eindeutigen Datenindex einen Abgleich des wiederholt übertragenen, signierten Datentelegrammes mit dem korrespondierenden, im Speicher hinterlegten Datentelegramm durch. Das erfindungsgemäße Verfahren wird anschließend beliebig oft wiederholt.

In der Regel erfolgt eine Übertragung der Datentelegramme mittels des Feldbusses in einer industriellen Anlage, insbesondere Automatisierungs- oder Prozessanlage, nur innerhalb der Anlage, also auf einem lokal stark begrenzten Bereich. Bei den übertragenen Datentelegrammen handelt es sich beispielsweise um Messwerte, Binärsignal oder Steuersignale mit einheitlichen, insbesondere normierten Datenformaten. Ohne eine detaillierte Kenntnis einer Topologie der Anlage und der Kommunikationsverbindungen zwischen den einzelnen Empfängern und Sendern kann sich einer Person ein Inhalt der übertragenen Datentelegramme nicht erschließen. Ist die Person vor Ort, ist der Inhalt der Datentelegramme beispielsweise mittels Vorortanzeigegeräten direkt ersichtlich.

Seitens der Anmelderin ist erkannt worden, dass auf eine Verschlüsselung der übertragenen Datentelegramme in zuvor erläutertem Kontext weitgehend verzichtet werden kann. Es muss nur sichergestellt werden, dass der Sender der Datentelegramme nicht unbemerkt ersetzt werden kann, wodurch die Sicherheit der Datenübertragung nicht mehr gewährleistet wäre.

Die Erfindung basiert auf der überraschenden Erkenntnis, dass eine eigentliche Übertragung der Datentelegramme auf Feldbussystemen von dem wenigstens einen Sender zu dem wenigstens einen Empfänger im Wesentlichen ohne zusätzliche Sicherheitsvorkehrungen in Echtzeit erfolgen kann. Zur Gewährleistung der Sicherheit der Datenübertragung wird im Rahmen des erfindungsgemäßen Verfahrens jedes von dem Sender an den Empfänger zu übertragene Datentelegramm mit einem Datenindex versehen. Der Datenindex dient dabei einer eindeutigen Identifizierung des jeweiligen übertragenen Datentelegramms. Das Versehen der Datentelegramme mit dem Datenindex stellt dabei einen vernachlässigbaren Mehraufwand für den Sender und Empfänger dar.

Der Empfänger speichert jedes von dem Sender empfangene Datentelegramm samt dem dazugehörigen Datenindex in einem (Daten-)Speicher. Der Speicher kann dabei direkt in dem Empfänger integriert sein. Es ist aber auch möglich, dass der Empfänger auf einen außerhalb des Empfängers angeordneten separaten Speicher zugreift.

Nach dem Ablauf eines bestimmten Zeitintervalls oder alternativ nach dem Übertragen einer bestimmten Anzahl an Datentelegrammen überträgt der Sender ein bereits übertragenes Datentelegramm erneut. Dabei ist das erneut übertragene Datentelegramm insbesondere verschlüsselt und mit einer digitalen Signatur versehen. Mittels dieser Signatur kann der Empfänger darüber rück-schließen, ob der Sender vertrauenswürdig ist. Dazu entschlüsselt der Empfänger mittels eines ihm bekannten Schlüssels das wiederholt übertragene Datentelegramm und erhält so das unverschlüsselte, wiederholt übertragene Datentelegramm. Anhand des eindeutigen Datenindexes kann der Empfänger das wiederholt übertragene Datentelegramm mit dem ursprünglichen, bereits zuvor (unverschlüsselt) übertragenen Datentelegramm vergleichen. Stimmen beide Datentelegramme überein, so ist eine Authentizität des Senders gewährleistet.

Als Signaturverfahren kann beispielsweise, ohne sich darauf zu beschränken, eine RSA-Signatur verwendet werden. Der hierfür notwendige öffentliche Schlüssel des Senders kann direkt im Empfänger hinterlegt sein. Alternativ ist es auch möglich, dass der Empfänger auf eine externe Signaturstelle zugreift, bei welcher der Sender als vertrauenswürdiger Kommunikationsteilnehmer registriert ist.

In dem Sender sowie dem Empfänger üblicherweise eingesetzte Hochleistungs-Security-Bausteine produzieren beim Verschlüsseln und Entschlüsseln der Datentelegramme eine vergleichsweise hohe Verlustleistung. In der Automatisierungstechnik ist ein lüfterloser Betrieb aller Komponenten in rauer Industrieumgebung von großem Vorteil. Dieses bedeutet, dass fast alle Komponenten vollständig gekapselt sind und die produzierte Abwärme rein durch Konvektion über das Gehäuse abgegeben werden kann. Die hohe punktuelle Verlustleistung beim Einsatz der Hochleistungs-Security-Bausteine kann mittels Konvektion nicht oder nur unzureichend abgeführt werden. Zu berücksichtigen ist dabei auch eine höhere max. Umgebungstemperatur von typ. 60°C bzw. 85°C für Outdoor-Komponenten.

Das erfindungsgemäße Verfahren reduziert die notwendigen Verschlüsselungen und Entschlüsselungen gegenüber den bislang eingesetzten und bekannten Verfahren auf ein Mindestmaß. Die wenigen notwendigen Verschlüsselungen und Entschlüsselungen können darüber hinaus mit einer verringerten Vorgangsgeschwindigkeit parallel zur eigentlichen Verarbeitung der Datentelegramme in Sender und Empfänger erfolgen. Damit kann das erfindungsgemäße Verfahren zu einer deutlichen Reduktion der Verarbeitungsleistung und damit der auftretenden Verlustleistung in Sender und Empfänger führen. Zusätzlich können Security-Bausteine verwendet werden, die mit deutlich geringeren Leistungen betrieben worden.

Das erfindungsgemäße Verfahren kann während der Datenübertragung zwischen Sender und Empfänger beliebig oft wiederholt werden.

Der Datenindex kann durch den Sender mittels einer fortlaufenden Folge erzeugt werden. Insbesondere kommt hierfür eine fortlaufende Nummerierung in Frage. Alternativ kann der Datenindex mittels eines zufällig ermittelten Codes erzeugt werden.

Bei einer vorteilhaften Weiterbildung des Verfahrens wird das bestimmte Zeitintervall oder die bestimmte Anzahl an Datentelegrammen nach einem oder mehreren Durchläufen der zuvor erläuterten erfindungsgemäßen Verfahrensschritte variiert. Durch die Variation eines Sendezeitpunktes des wiederholt übertragenen Datentelegramms wird es einem möglichen Angreifer der Kommunikation zusätzlich erschwert, eine Struktur der vorgenommenen Sicherungsmaßnahmen zu erkennen. Die Variation kann dabei nach jedem erfolgten Durchlauf des erfindungsgemäßen Verfahrens.

Vorteilhafterweise wird das vorherbestimmte Zeitintervall oder die bestimmte Anzahl an Datentelegrammen zwischen dem Senden der wiederholt übertragenen, signierten Datentelegramme an eine Prozessorrechenleistung des leistungsschwächsten Empfängers angepasst wird. Je höher die dem Empfänger zur Verfügung stehende Prozessorrechenleistung ist, desto kürzer kann das Zeitintervall zwischen den wiederholt übertragenen Datentelegrammen durch den Sender gewählt werden. Dadurch können auf einfache Art und Weise Sende-/Empfangsgeräte miteinander kommunizieren, die voneinander verschiedene Prozessorrechenleistungen aufweisen.

Bei einer vorteilhaften Weiterbildung der Erfindung wird bei wenigstens einer, vorzugsweise jeder Wiederholung der erfindungsgemäßen Verfahrensschritte ein signiertes Datentelegramm wiederholt von dem Sender an den Empfänger übertragen, dessen Datenindex sich von dem Datenindex des im zuvor erfolgten Durchlauf wiederholt übertragenen, signierten Datentelegrammes unterscheidet. Mit anderen Worten ausgedrückt kann beispielsweise in einem ersten Durchlauf des erfindungsgemäßen Verfahrens ein Datentelegramm mit dem Datenindex 1 wiederholt übertragen werden. Im darauffolgenden Durchlauf wird dann beispielsweise ein Datentelegramm mit dem Datenindex 2 übertragen. Im sich wiederum daran anschließenden Durchlauf wird schließlich beispielsweise ein Datentelegramm mit dem Datenindex 3 wiederholt übertragen. Dadurch lässt sich eine Sicherheit des Verfahrens noch weiter erhöhen.

Die zuvor erläuterte Variation des Datenindexes kann auch mit der ebenfalls zuvor erläuterten Variation der Sendezeitpunkte der wiederholt übertragenen Datentelegramme kombiniert werden, um die Sicherheit zu erhöhen.

Bevorzugt umfasst das während eines Durchlaufs des erfindungsgemäßen Verfahrens wiederholt übertragene, signierte Datentelegramm zusätzlich eine Information über den Datenindex des im darauffolgenden Durchlauf des erfindungsgemäßen Verfahrens wiederholt zu übertragene, signierte Datentelegramm. Der Empfänger bekommt somit eine Information über das im nächsten Verfahrensdurchlauf zu prüfenden Datentelegramm durch den Sender mitgeteilt. Dadurch werden die wiederholt übertragenen Prüfdatentelegramme in einer Art und Weise miteinander verkettet, die eine Manipulation der Datenübertragung durch einen Angreifer nahezu unmöglich macht. Zusätzlich muss der Empfänger nicht jedes von dem Sender empfangene Datentelegramm in dem Speicher hinterlegen, sondern nur das ihm zuvor bereits angekündigte. Hierdurch lässt sich die notwendige Speichergröße reduzieren, ein Arbeitsaufwand des Empfängers verringern und eine Zugriffszeit auf das im Speicher hinterlegte, zu vergleichende Datentelegramm minimieren.

Wenn die Datenübertragung, wie es bei mittels eines Feldbusses betriebenen industriellen Anlagen üblich ist, synchron bzw. zyklisch von statten geht, kann der Sender vorteilhafterweise einen Datenindex in Form einer fortlaufenden Folge verwenden, um dem Empfänger das nächste zu prüfende Datentelegramm mitzuteilen. Im Falle von asynchron übertragenen Datentelegrammen, beispielsweise einmaligen Ereignissen, verwendet der Sender vorteilhafterweise einen Datenindex mit einem zufällig ermittelten Code.

Bei einer bevorzugten Ausführungsform des Verfahrens erfolgt bei einem erstmaligen Verbindungsaufbau zwischen dem Sender und dem Empfänger eine Verifikation des Senders gegenüber dem Empfänger zusätzlich mittels eines Austauschs von Sicherheitsschlüsseln. In der Regel ist der Verbindungsaufbau zeitunkritisch, weshalb hier die Verifikation anhand bekannter, nicht echtzeitfähiger Methoden (wie des Austausches von Sicherheitsschlüsseln)erfolgen kann. Dabei kann der Sender dem Empfänger vorteilhafterweise den Datenindex des ersten wiederholt zu übertragenen Datentelegramms mitteilen, um die oben erläuterte Sicherheitskette zwischen den wiederholt übertragenen Datentelegrammen zu beginnen.

Bevorzugt übermittelt der Empfänger dem Sender oder der Sender dem Empfänger jeweils ein Freigabesignal, das dem jeweils anderen Kommunikationspartner signalisiert, wann er ein nächstes Datentelegramm, vorzugsweise das nächste wiederholt übertragene Datentelegramm übertragen kann. Hierdurch können freie Kapazitäten des Senders und/oder des Empfängers effizient ausgenutzt und Reaktionszeiten der Kommunikationsteilnehmer verringert werden, was deren Echtzeitfähigkeit erhöht.

Das Verfahren zur echtzeitbasierten Übertragung einer Mehrzahl an Datentelegrammen wird bevorzugt in einem Kommunikationssystem mit wenigstens einem Empfänger und wenigstens einem Sender, die mittels eines Feldbusses miteinander in Verbindung stehen, verwendet, wobei Sender und Empfänger jeweils einen Security-Baustein zur Verschlüsselung und/oder Entschlüsselung von Datentelegrammen oder eine entsprechende Logik einsetzen. Die Security-Bausteine bzw. entsprechende Logik dienen dabei der Verschlüsselung/Signierung des wiederholt zu übertragenen Datentelegramms durch den Sender sowie der Entschlüsselung des wiederholt übertragenen Datentelegramms durch den Empfänger.

Ein solches Kommunikationssystem wird vorteilhafterweise in einer industriellen Anlage, insbesondere Automatisierungsanlage oder Prozessanlage, verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein erfindungsgemäßes Kommunikationssystem in einer Prinzipskizze; und
- Figur 2: eine erfindungsgemäße Übertragung von Datentelegrammen in einem Ablaufdiagramm.

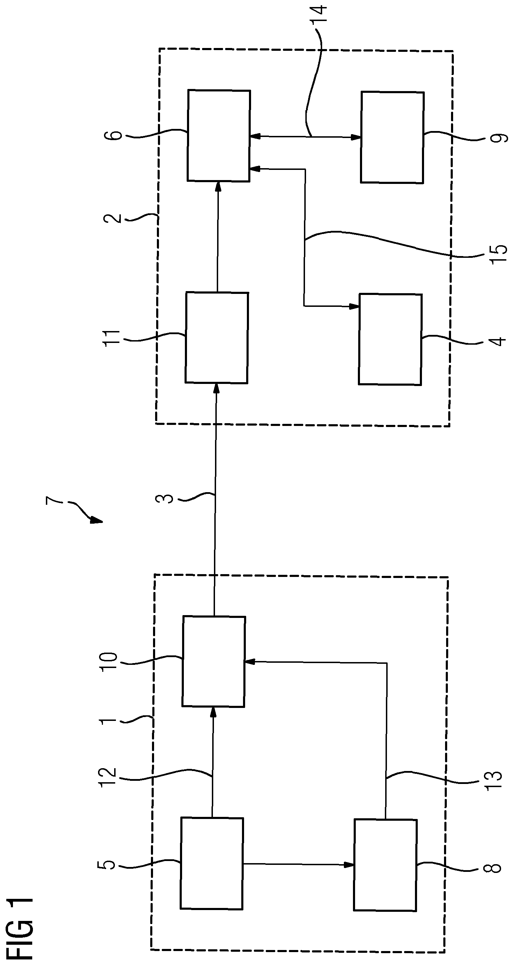

In Figur 1 ist eine schematische, zeitliche Abfolge einer erfindungsgemäßen Übertragung von Datentelegrammen dargestellt. In Figur 1 ist ein zur Ausführung des erfindungsgemäßen Verfahrens ausgebildetes und vorgesehenes Kommunikationssystem 7 dargestellt, das einen Sender 1 und einen Empfänger 2 umfasst. Sowohl der Sender 1 als auch der Empfänger 2 sind mit einem unterbrochenen (gestrichelten) Rechteck gekennzeichnet und weisen eine in diesem Kontext übliche, in diesem Rahmen nicht näher erläuterte Form auf.

Der Sender 1 umfasst einen Prozessor bzw. Mikrocontroller 5, einen Security-Baustein bzw. entsprechende Logik 8 und eine Feldbus-Schnittstelle 10. Der Empfänger 2 umfasst einen Prozessor bzw. Mikrocontroller 6, einen Security-Baustein oder eine entsprechende Logik 9, eine Feldbus-Schnittstelle 11 und einen Speicher 4. Die beiden Feldbus-Schnittstellen 10, 11 sind mittels eines Feldbusses 3 miteinander verbunden. Bei dem Feldbus 3 kann es sich beispielsweise um einen PROFIBUS handeln, ohne sich jedoch darauf zu beschränken.

Der Sender 1 überträgt mittels des Feldbusses 3 Datentelegramme an den Empfänger 2. Hierzu leitet der Prozessor 5 Datentelegramme unverschlüsselt über eine erste Datenleitung 12 direkt an die Feldbus-Schnittstelle 10 weiter, die wiederum die Datentelegramme mittels des Feldbusses 3 an die Feldbus-Schnittstelle 11 des Empfängers 2 überträgt. Der Prozessor 6 des Empfängers 2 empfängt die übertragenen Datentelegramme von der Feldbus-Schnittstelle 11 und speichert diese über einen Speicherzugriff 15 in dem Speicher 4. Der Speicher 4 ist in vorliegendem Ausführungsbeispiel in den Empfänger 2 integriert. Er muss sich aber nicht zwingend in den Empfänger 2 integriert sein, sondern kann auch extern angeordnet sein.

Jedes von dem Prozessor 5 weitergeleitete Datentelegramm wird von diesem mit einem Datenindex versehen. Der Datenindex kann durch den Prozessor 5 des Senders 1 mittels einer fortlaufenden Folge erzeugt werden. Insbesondere kommt hierfür eine fortlaufende Nummerierung in Frage. Alternativ kann der Datenindex mittels eines zufällig ermittelten Codes erzeugt werden.

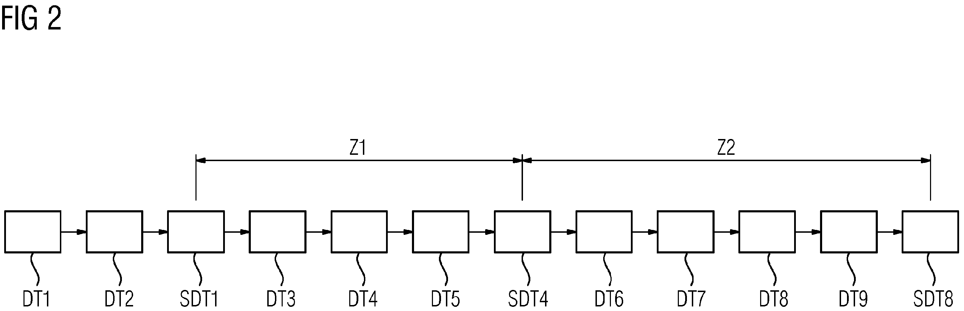

Eine solche zeitliche Abfolge der von dem Sender 1 an den Empfänger 2 übertragenen Datentelegramme ist in Figur 2 dargestellt. Jedes Datentelegramm, das mit "DT" gekennzeichnet ist, ist mit einem Datenindex mittels einer fortlaufenden Nummerierung gekennzeichnet ("1", "2" usw.).

Nach einer bestimmten Anzahl an übertragenen Datentelegrammen oder nach dem Ablauf eines bestimmten Zeitintervalls wird ein Datentelegramm wiederholt von dem Sender 1 zu dem Empfänger 2 übertragen. Dieses Datentelegramm leitet der Prozessor 5 des Senders 1 an den Security-Baustein 8 des Senders 1 weiter. Dort wird das Datentelegramm mit einer eindeutigen Signatur versehen bzw. verschlüsselt. Über eine zweite Datenleitung 13 des Senders 1 wird das wiederholt zu übertragene, signierte Datentelegramm an die Feldbus-Schnittstelle 10 des Senders 1 geleitet. Von dort wird es mittels des Feldbusses 3 an die Feldbus-Schnittstelle 11 des Empfängers 2 übertragen. Der Prozessor 6 des Empfängers 2 erkennt, dass es sich um ein signiertes Datentelegramm handelt. Mittels eines Entschlüsselungsvorgangs 14 durch den Security-Baustein 9 des Empfängers 9 wird das wiederholt übertragene, signierte Datentelegramm entschlüsselt. Durch einen anschließenden Abgleich des entschlüsselten Datentelegramms mit den in dem Speicher 4 hinterlegten, bereits von dem Sender 1 empfangenen Datentelegrammen kann der Empfänger 2 eindeutig feststellen, dass der Sender 1 authentisch ist. Mit anderen Worten kann der Empfänger 2 den Sender 1 als vertrauenswürdig identifizieren.

Aufgrund der geringen Anzahl an Verschlüsselung- und Entschlüsselungsvorgängen und der niedrigen zeitlichen Priorität dieser Vorgänge werden die Security-Bausteine 8, 9 des Senders 1 und des Empfängers 2 mit einer vergleichsweise geringen (elektrischen) Leistung betrieben, was Vorteile hinsichtlich einer Energieeffizienz des Kommunikationssystems 7 mit sich bringt und dessen Wärmemanagement erleichtert.

In Figur 2 sind die wiederholt übertragenen, signierten Datentelegramme mit "SDT" gekennzeichnet. Zusätzlich weisen sie den Datenindex ("1", "2" usw.) des ursprünglichen Datentelegramms auf, wessen Wiederholung sie darstellen. Ein Zeitintervall Z1 zwischen dem ersten in Figur 2 dargestellten, wiederholten Datentelegramm ("SDT1") und dem zweiten wiederholten Datentelegramm ("SDT4") ist betragsmäßig kleiner als ein Zeitintervall Z2 zwischen dem zweiten wiederholten Datentelegramm ("SDT4") und dem dritten wiederholten Datentelegramm ("SDT8"). Die Zeitintervalle können im Rahmen des erfindungsgemäßen Verfahrens beliebig variiert werden, um die Sicherheit gegenüber möglichen Angreifern zu erhöhen.

Die wiederholt übertragenen, signierten Datentelegramme können zusätzlich eine Information über den Datenindex des im darauffolgenden Durchlauf des erfindungsgemäßen Verfahrens wiederholt zu übertragenen, signierten Datentelegramms aufweisen. Der Empfänger 2 bekommt somit eine Information über das im nächsten Verfahrensdurchlauf zu prüfende Datentelegramm durch den Sender 1 mitgeteilt. Dadurch werden die wiederholt übertragenen Prüfdatentelegramme in einer Art und Weise miteinander verkettet, die eine Manipulation der Datenübertragung durch einen Angreifer nahezu unmöglich macht. Zusätzlich muss der Empfänger 2 nicht jedes von dem Sender 1 empfangene Datentelegramm in dem Speicher 4 hinterlegen, sondern nur das ihm zuvor bereits angekündigte. Hierdurch lässt sich die notwendige Speichergröße reduzieren, ein Arbeitsaufwand des Empfängers 2 verringern und eine Zugriffszeit auf das im Speicher 4 hinterlegte, zu vergleichende Datentelegramm minimieren.

Das Kommunikationssystem 7 lässt sich vorteilhafterweise in einer industriellen Anlage, vorzugsweise einer Automatisierungsanlage oder Prozessanlage, verwenden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. So ist die Erfindung etwa in industriellen Anlagen jeglicher Art einsetzbar, im Bereich von Fertigungsanlagen und Prozessanlagen ebenso wie im Bereich der Energieerzeugung oder Logistik.

## Patentansprüche

1. Verfahren zu einer echtzeitbasierten, verzögerungsfreien Übertragung einer Mehrzahl an Datentelegrammen von wenigstens einem verifizierten Sender (1) zu wenigstens einem verifizierten Empfänger (2) mittels eines Feldbusses (3) in einer industriellen Anlage, insbesondere Automatisierungsanlage oder Prozessanlage, die folgenden Verfahrensschritte umfassend:
a) Jedes von dem Sender (1) zu dem Empfänger (2) zu übertragende Datentelegramm wird von dem Sender (1) mit einem zusätzlichen Datenindex versehen;
b) Der Empfänger (2) hinterlegt jedes von dem Sender (1) empfangene Datentelegramm mit dem dazugehörigen zusätzlichen Datenindex in einem Speicher (4);
c) Nach dem Ablauf eines bestimmten Zeitintervalls (Z1, Z2) oder nach dem Übertragen einer bestimmten Anzahl an Datentelegrammen überträgt der Sender (1) ein bereits an den Empfänger (2) übertragenes Datentelegramm wiederholt, wobei das wiederholt übertragene Datentelegramm eine zusätzliche Signatur aufweist, und wobei das wiederholt übertragene Datentelegramm vorzugsweise zusätzlich von dem Sender (1) verschlüsselt wird;
d) Der Empfänger (2) führt nach dem Empfangen des wiederholt übertragenen, signierten Datentelegramms zur Verifikation des Senders (1) anhand des eindeutigen Datenindex einen Abgleich des wiederholt übertragenen, signierten Datentelegrammes mit dem korrespondierenden, im Speicher (4) hinterlegten Datentelegramm durch.

2. Verfahren nach Anspruch 1, bei dem das bestimmte Zeitintervall (Z1, Z2) oder die bestimmte Anzahl an Datentelegrammen nach einem oder mehreren Durchläufen der Verfahrensschritte a bis d gemäß Anspruch 1 variiert wird.

3. Verfahren nach Anspruch 1 oder 2, bei dem das vorherbestimmte Zeitintervall (Z1, Z2) oder die bestimmte Anzahl an Datentelegrammen zwischen dem Senden der wiederholt übertragenen, signierten Datentelegramme an eine Rechenleistung eines Prozessors (5, 6) des wenigstens einen Empfängers (2) angepasst wird.

4. Verfahren nach einem der Ansprüche 1 bis 3, bei dem bei wenigstens einer, vorzugsweise jeder Wiederholung der Verfahrensschritte a bis d gemäß Anspruch 1 ein signiertes Datentelegramm wiederholt von dem Sender (1) an den Empfänger (2) übertragen wird, dessen Datenindex sich von dem Datenindex des im zuvor erfolgten Durchlauf wiederholt übertragenen, signierten Datentelegrammes unterscheidet.

5. Verfahren nach einem der vorangegangenen Ansprüche, bei dem das wiederholt übertragene, signierte Datentelegramm jeweils zusätzlich eine Information über den Datenindex des im darauffolgenden Durchlauf der Verfahrensschritte a bis d gemäß Anspruch 1 wiederholt zu übertragene, signierte Datentelegramm umfasst.

6. Verfahren nach einem der vorangegangenen Ansprüche, bei dem der Datenindex durch den Sender (1) mittels einer fortlaufenden Folge erzeugt wird, insbesondere mittels einer fortlaufenden Nummerierung.

7. Verfahren nach einem der Ansprüche 1 bis 5, bei dem der Datenindex mittels eines zufällig ermittelten Codes erzeugt wird.

8. Verfahren nach einem der vorangegangenen Ansprüche, bei dem bei einem erstmaligen Verbindungsaufbau zwischen dem Sender (1) und dem Empfänger (2) eine Verifikation des Senders (1) gegenüber dem Empfänger (2) zusätzlich mittels eines Austauschs von Sicherheitsschlüsseln erfolgt.

9. Verfahren nach einem der vorangegangenen Ansprüche, bei dem der Empfänger (2) dem Sender (1) oder umgekehrt der Sender (1) dem Empfänger (2) ein Freigabesignal übermittelt, das dem jeweils anderen Kommunikationspartner signalisiert, wann er ein nächstes Datentelegramm, vorzugsweise das nächste wiederholt übertragene Datentelegramm übertragen kann.

10. Kommunikationssystem (7) mit wenigstens einem Empfänger (2) und wenigstens einem Sender (1), die mittels eines Feldbusses (3) miteinander in Verbindung stehen, wobei Sender (1) und Empfänger (2) jeweils einen Security-Baustein (8, 9) oder eine vergleichbare Logik zur Verschlüsselung und/oder Entschlüsselung von Datentelegrammen und einen Prozessor (5, 6) aufweisen, welches Kommunikationssystem (7) dazu ausgebildet und vorgesehen ist, zwischen dem Sender (1) und dem Empfänger (2) eine echtzeitbasierte Übertragung von Datentelegrammen gemäß einem der Ansprüche 1 bis 9 durchzuführen.

11. Industrielle Anlage, insbesondere Automatisierungsanlage oder Prozessanlage, umfassend ein Kommunikationssystem (7) gemäß Anspruch 10.

## Claims

1. Method for the real-time-based transfer, without delays, from at least one verified transmitter (1) to at least one verified receiver (2), of a plurality of data telegrams by a field bus (3) in an industrial plant, in particular an automation plant or processing plant, comprising the following method steps:
(a) each data telegram to be transferred from the transmitter (1) to the receiver (2) is provided with an additional data index by the transmitter (1);
(b) the receiver (2) stores each data telegram received from the transmitter (1) in a memory (4), along with the associated additional data index;
(c) once a defined time interval (Z1, Z2) has elapsed, or once a defined number of data telegrams has been transferred, the transmitter (1) transfers, in a repeated manner, a data telegram that has already been transferred to the receiver (2), wherein the data telegram that is transferred in a repeated manner has an additional signature, and wherein the data telegram that is transferred in a repeated manner is preferably additionally encrypted by the transmitter (1);
(d) after receiving the signed data telegram that has been transferred in a repeated manner, the receiver (2) carries out a comparison of the signed data telegram that has been transferred in a repeated manner with the corresponding data telegram stored in the memory (4), for the purpose of verifying the transmitter (1), using the unambiguous data index.

2. Method according to claim 1, in which the defined time interval (Z1, Z2) or the defined number of data telegrams is varied after the method steps a to d according to claim 1 have been run one or more times.

3. Method according to claim 1 or 2, in which the predetermined time interval (Z1, Z2) or the defined number of data telegrams between transmission of the signed data telegrams that are transferred in a repeated manner is adapted to a processing power of a processor (5, 6) of the at least one receiver (2).

4. Method according to one of claims 1 to 3, in which, on at least one occasion, preferably each occasion, that the method steps a to d according to claim 1 are repeated, a signed data telegram that is transferred from the transmitter (1) to the receiver (2) in a repeated manner has a data index that differs from the data index of the signed data telegram that was transferred in a repeated manner in the previous run.

5. Method according to one of the preceding claims, in which the signed data telegram that is transferred in a repeated manner in each case additionally comprises an item of information on the data index of the signed data telegram that is to be transferred in a repeated manner during the subsequent run of the method steps a to d according to claim 1.

6. Method according to one of the preceding claims, in which the data index is generated by the transmitter (1) using a continuous sequence, in particular by incremental numbering.

7. Method according to one of claims 1 to 5, in which the data index is generated by a randomly determined code.

8. Method according to one of the preceding claims, in which, when a connection is made between the transmitter (1) and the receiver (2) for the first time, a verification of the transmitter (1) with respect to the receiver (2) is additionally performed, by exchanging security keys.

9. Method according to one of the preceding claims, in which the receiver (2) communicates to the transmitter (1), or conversely the transmitter (1) communicates to the receiver (2), a release signal that signals to the respectively other communication partner when it may transfer a succeeding data telegram, preferably the next data telegram that is transferred in a repeated manner.

10. Communication system (7) having at least one receiver (2) and at least one transmitter (1) that are connected to one another by a field bus (3), wherein the transmitter (1) and receiver (2) each have a security chip (8, 9) or a comparable logic circuit for encrypting and/or decrypting data telegrams, and a processor (5, 6), wherein the communication system (7) is intended and provided for the purpose of carrying out a real-time-based transfer of data telegrams between the transmitter (1) and the receiver (2), according to one of claims 1 to 9.

11. Industrial plant, in particular an automation plant or processing plant, comprising a communication system (7) according to claim 10.

## Revendications

1. Procédé de transmission, en temps réel et sans retard, d'une pluralité de télégrammes de données d'au moins un émetteur (1) vérifié à au moins un récepteur (2) vérifié, au moyen d'un bus (3) sur site d'une installation industrielle, notamment d'une installation d'automatisation ou d'une installation de processus, comprenant les stades de procédé suivants :
a) chaque télégramme de données, à transmettre de l'émetteur (1) au récepteur (2), est pourvu par l'émetteur (1) d'un indice de données supplémentaire ;
b) le récepteur (2) met dans une mémoire (4) chaque télégramme de données reçu de l'émetteur (1) avec l'indice de données supplémentaire, qui lui appartient ;
c) après l'expiration d'un intervalle (Z1, Z2) de temps déterminé ou après la transmission d'un nombre déterminé de télégrammes de données, l'émetteur (1) transmet, de manière répétée, un télégramme de données déjà transmis au récepteur (2), le télégramme de données transmis de manière répétée ayant une signature supplémentaire et le télégramme de données transmis de manière répétée étant, de préférence, chiffré supplémentairement par l'émetteur (1) ;
d) le récepteur (2) effectue, après la réception du télégramme de données transmis de manière répétée et signé, pour la vérification de l'émetteur (1) à l'aide de l'indice de données univoque, une égalisation du télégramme de données transmis de manière répétée et signé au télégramme de données correspondant mis dans la mémoire (4).

2. Procédé suivant la revendication 1, dans lequel on fait varier l'intervalle (Z1, Z2) de temps déterminé ou le nombre déterminé de télégrammes de données, après une exécution ou plusieurs exécutions des stades a) à d) du procédé suivant la revendication 1.

3. Procédé suivant la revendication 1 ou 2, dans lequel, entre l'émission des télégrammes de données transmis de manière répétée et signés, on adapte, à une puissance de calcul d'un processeur (5, 6) du au moins un récepteur (2), l'intervalle (Z1, Z2) de temps déterminé à l'avance ou le nombre déterminé de télégrammes de données.

4. Procédé suivant l'une des revendications 1 à 3, dans lequel, à au moins une, de préférence à chaque répétition des stades a) à d) du procédé suivant la revendication 1, on transmet de l'émetteur (1) au récepteur (2), de manière répétée, un télégramme de données signé, dont l'indice de données se distingue de l'indice de données du télégramme de données signé et transmis de manière répétée dans l'exécution du passage effectuée auparavant.

5. Procédé suivant l'une des revendications précédentes, dans lequel le télégramme de données, transmis de manière répétée et signé, comprend, respectivement en outre, une information sur l'indice de données du télégramme de données signé et transmis de manière répétée dans l'exécution suivante des stades a) à d) du procédé.

6. Procédé suivant l'une des revendications précédentes, dans lequel on produit l'indice de données par l'émetteur (1) au moyen d'une suite continue, notamment au moyen d'une numérotation continue.

7. Procédé suivant l'une des revendications 1 à 5, dans lequel on produit l'indice de données au moyen d'un code déterminé aléatoirement.

8. Procédé suivant l'une des revendications précédentes, dans lequel, lors de l'établissement d'une liaison pour la première fois entre l'émetteur (1) et le récepteur (2), une vérification de l'émetteur (1) par rapport au récepteur (2) est effectuée supplémentairement au moyen d'un échange de clés sécurisées.

9. Procédé suivant l'une des revendications précédentes, dans lequel le récepteur (2) transmet à l'émetteur (1) ou inversement l'émetteur (1) transmet au récepteur (2) un signal de validation, qui signal à l'autre partenaire de communication quand il peut transmettre un télégramme de données venant immédiatement ensuite, de préférence le télégramme de données transmis de manière répétée venant immédiatement ensuite.

10. Système (7) de communication, comprenant au moins un récepteur (2) et au moins un émetteur (1), qui sont en liaison l'un avec l'autre au moyen d'un bus (3) sur site, l'émetteur (1) et le récepteur (2) ayant chacun un module (8, 9) security ou une logique comparable de chiffrement et/ou de déchiffrement de télégrammes de données et un processeur (5, 6), lequel système (7) de communication est constitué et prévu pour effectuer, entre l'émetteur (1) et le récepteur (2), une transmission en temps réel de télégrammes de données suivant l'une des revendications 1 à 9.

11. Installation industrielle, notamment installation d'automatisation ou installation de processus, comprenant un système (7) de communication suivant la revendication 10.
